**Europäisches Patentamt**

**European Patent Office**

**Office européen des brevets**

(19)

(11) Veröffentlichungsnummer : **0 345 843 B1**

(12) # EUROPÄISCHE PATENTSCHRIFT

(45) Veröffentlichungstag der Patentschrift :
**15.04.92 Patentblatt 92/16**

(51) Int. Cl.⁵ : **H04B 7/08**

(21) Anmeldenummer : **89201264.2**

(22) Anmeldetag : **03.05.89**

(54) **Empfangsverfahren und Empfangs-Antennensystem für mobilen Emfang.**

Verbunden mit 89905692.3/0418265
(europäische
Anmeldenummer/Veröffentlichungsnummer)
durch Entscheidung vom 24.06.91.

(30) Priorität : **03.05.88 DE 3814899**

(43) Veröffentlichungstag der Anmeldung :
**13.12.89 Patentblatt 89/50**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI LU NL SE**

(56) Entgegenhaltungen :
**EP-A- 0 201 977**
**EP-A- 0 263 357**
**DE-A- 3 443 466**

(56) Entgegenhaltungen :
**US-A- 4 092 596**
**PATENT ABSTRACTS OF JAPAN, Band 6, Nr.**
**42 (E-98)[920], 16. März 1982; & JP-A-56 158**
**540**

(73) Patentinhaber : **Richard Hirschmann GmbH &**
**Co.**
**Richard-Hirschmann-Strasse 19 Postfach 110**
**W-7300 Esslingen a.N. (DE)**

(72) Erfinder : **Buck, Walter, Dr.**
**Steinwaldstrasse 90**
**W-7000 Stuttgart 70 (DE)**
Erfinder : **Schenkyr, Dieter c/o Richard**
**Hirschmann GmbH & Co.**
**Richard Hirschmann Str. 19**
**W-7300 Esslingen (DE)**

(74) Vertreter : **Geyer, Ulrich F., Dr. Dipl.-Phys. et al**
**WAGNER & GEYER Patentanwälte**
**Gewuerzmuehlstrasse 5 Postfach 246**
**W-8000 München 22 (DE)**

EP 0 345 843 B1

Jouve, 18, rue Saint-Denis, 75001 PARIS

## Beschreibung

Die Erfindung betrifft ein Empfangsverfahren für mobilen Empfang mit mehreren einzelnen Empfangsantennen, bei dem zwischen einzelnen Antennensignalen und/oder aus Linearkombinationen von Antennensignalen gebildeten Signalen umgeschaltet wird. Die Erfindung betrifft weiterhin ein Empfangs-Antennensystem für mobilen Empfang mit mehreren einzelnen Empfangsantennen, einem Umschalter, zum Umschalten zwischen den einzelnen Antennensignalen und/oder aus Linearkombinationen von Antennensignalen gebildeten Signalen, und einer Empfangsschaltung.

Bei mobilem Empfang, beispielsweise beim Empfang von Rundfunk- und/oder Fernsehsendungen in Kraftfahrzeugen treten Empfangsstörungen auf, die den Empfang erheblich beeinträchtigen. Derartige Empfangsstörungen beruhen auf der Einstrahlung der Rundfunk- bzw. Fernsehwellen aus mehr als einer Richtung auf die Antenne. Dieser sogenannte Mehrwegeempfang tritt dadurch auf, daß die Rundfunk- bzw. Fernsehwellen nicht nur vom Sender direkt zur Antenne gelangen, sondern beispielsweise an Gebäuden reflektiert werden und auf anderen Wegen ebenfalls die Empfangsantenne erreichen. Die Empfangswege für die mehreren, von der Empfangsantenne aufgenommenen Signale sind unterschiedlich lang, so daß im Rundfunk- bzw. Fernsehsignal besonders bei frequenzmoduliertem Träger Interferenzstörungen auftreten, wodurch der resultierende Träger sowohl eine Amplitudenmodulation als auch eine Phasenmodulation erfährt. Diese ergeben dann die lästigen und den Empfang erheblich beeinträchtigenden Empfangsstörungen, die aufgrund der physikalischen Gegebenheiten unabhängig von der Antennenart, seien es Teleskopantennen, elektronische Kurzstabantennen oder elektronische Scheibenantennen, auftreten.

In einem Ansatz von R. Heidester & K. Vogt in NTZ 1958, Heft 6, Seiten 315-319 ist beispielsweise ein Empfangsantennensystem beschrieben, das zur Verringerung dieser aufgrund von Mehrwegeempfang auftretenden Störungen mehrere einzelne Empfangsantennen für den mobilen Empfang aufweist. Bei dieser bekannten Anordnung ist jeder Einzelantenne ein Empfänger zugeordnet, mit dem die Amplitude jedes Einzelsignals der jeweiligen Einzelantenne kontinuierlich festgestellt und überwacht wird. Die ermittelten Amplituden werden verglichen und das jeweils stärkste Signal einer Einzelantenne wird als Empfangssignal verwendet. Diese Art eines Diversity-Systems, auch als Parallel- oder Empfänger-Diversity-System bezeichnet, ist jedoch schaltungstechnisch sehr aufwendig, da jede Antenne mit einem Empfänger versehen sein muß. Darüber hinaus ist nicht gesagt, daß die das stärkste Antennensignal abgebende Einzelantenne, die mit dem Rundfunkempfänger gemäß dem besagten Kriterium verbunden wird, notwendigerweise das beste Signal liefert, was insbesondere für frequenzmodulierte Signale gilt.

Beispielsweise aus der EP-A2-0 201 977, der DE-A2 33 34 735 und der Zeitschrift "Funkschau", 24, 1986, Seiten 42-45 ist ein weiteres Empfangs-Antennensystem der eingangs genannten Art bekannt, bei dem von einem Antennensignal zum anderen oder von einer Linearkombination aus Antennensignalen zu anderen Linearkombinationen umgeschaltet wird, wenn eine vorgegebene Schwelle der Empfangsqualität unterschritten wird. Dieses auch als Scanning-Diversity oder Antennen-Auswahl-Diversity-System bezeichnete Verfahren hat jedoch den wesentlichen Nachteil, daß der Schaltvorgang erst bei eingetretener Störung ausgelöst wird. Um dabei einen für den Benutzer zufriedenstellenden, unhörbaren Übergang zwischen den Antennensignalen bzw. Linearkombinationen aus Antennensignalen zu erreichen, muß das Umschalten extrem schnell vonstatten gehen, was schaltungstechnisch schwierig, sehr aufwendig und dennoch nur begrenzt möglich ist. Ein weiterer wesentlicher Nachteil dieses Empfangssystems besteht auch darin, daß eine Antenne, die ein relativ schlechtes Empfangssignal liefert, das jedoch knapp unterhalb der Schaltschwelle liegt, weiter in Betrieb gehalten wird, obgleich andere Antennen bessere Empfangssignale mit geringeren Störungen liefern. Weiterhin wird bei Auftreten von Störungen an der gerade aktivierten Antenne auf das Signal einer willkürlich gewählten folgenden Antenne bzw. eine andere Linearkombination von Antennensignalen umgeschaltet, die ebenfalls gestört sein kann, oder, wie zuvor beschrieben, gerade noch unterhalb der Schaltschwelle liegt. Die Empfangseigenschaften dieses Diversity-Systems sind daher nicht befriedigend.

Aus der JP-A- 56 158 540 (Patent Abstracts of Japan, Band 6, NR. 42 (E 89)(920), März 1982) ist ein Antennenempfangsverfahren bekannt, bei dem die nicht benutzten Antennen in zeitlicher Folge abgefragt werden. Hierfür ist ein Auswahlschalter vorgesehen, der unabhängig vom Nutzkanal-Wahlschalter Antennensignale zur Auswertung der Empfangsqualität schaltet. Für jede Antenne ist dabei jedoch ein Empfänger vorgesehen, was die Schaltungsanordnung aufwendig werden läßt.

Ausgehend von den herkömmlichen Antennen-Auswahl-Diversity-Verfahren und -Systemen liegt der Erfindung daher die Aufgabe zugrunde, durch einfachste schaltungstechnische Maßnahmen und Mittel die genannten Nachteile der herkömmlichen Systeme und Verfahren zu vermeiden und zu gewährleisten, daß von den anliegenden Antennen- bzw. Linearkombinationssignalen das amplituden stärkste Signal für den Empfang ausgewählt wird.

Die erfindungsgemäße Aufgabe wird ebenfalls in Zusammenhang mit einen Empfangs-Antennensystem der eingangs genannten Art erfindungsgemäß gelöst durch jeweils eine Probensignal-Entnahmenschaltung, einen Modulator zur Modulution des entnommenen Probensignals mit einem Hilfsmodulationssignal, eine Summierschaltung zum Addieren eine willkürlich ausgewählten oder durch einen vorgegebenen Zyklus eingestellten Antennen- bzw. Linearkombinationssignales mit dem modulierten Probensignal zwecks Bildung einen Summensignals, einen Demodulator zur Demodulation des in der Empfangsschaltung Verstärkten und selektierten Summensignals, eine Auswerteschaltung zur Auswertung des demodulierten Signals nach Betrag und/oder Phase und zur Ermittlung des jeweils amplituden Stärksten Probensignals und eine Steuerschaltung zur Steuerung eines Auswahlschalters zwecks Auswahl des dem amplitudenstärksten Probensignal entsprechenden Antennen- bzw. Linearkombinationssignals für den Empfang.

Durch die erfindungsgemäßen Maßnahmen, Probensignale zu entnehmen und kontinuierlich oder sequentiell hinsichtlich der Signalstärke zu überwachen, und in Abhängigkeit davon das Anschalten des entsprechenden stärksten Antennen- bzw. Linearkombinationssignals an die Empfangsschaltung zu bewirken, ist es möglich, immer das amplituden stärkste Signal für den Empfang ausnützen zu können. Da die einzelnen Antennen- bzw. Linearkombinationssignale durch Entnahme der Probensignale ständig auf ihre Signalstärke hin erfindungsgemäß überwacht werden, kann der Umschaltvorgang optimiert werden, so daß ausgeschlossen ist, daß ein relativ schlechtes Empfangssignal, das jedoch noch knapp unterhalb der Schaltschwelle liegt, weiterhin angeschaltet bleibt, obgleich andere Antennen bessere Empfangssignale liefern. Mit den erfindungsgemäßen Maßnahmen ist es also möglich, wie bei Parallel- oder Empfänger-Diversity-Verfahren die einzelnen Empfangssignale ständig auf ihre Qualität zu untersuchen und damit eine optimale jeweilige Umschaltung zu ermöglichen, ohne daß jedoch für jede Antenne ein Empfänger vorgesehen sein müßte. Das erfindungsgemäße Verfahren läßt sich daher mit einfachsten schaltungsmäßigen Maßnahmen realisieren.

Gemäß einer bevorzugten Ausführungsform der Erfindung wird das jeweilig entnommene Probensignale vorzugsweise einer trägerlosen Modulation und insbesondere einer Zweiseitenband-Modulation unterzogen. Daher ist es besonders vorteilhaft, wenn das einer trägerlosen Modulation unterzogene Probensignal dem willkürlich ausgewählten oder durch einen vorangegangenen Zyklus eingestellten Antennen- bzw. Linearkombinationssignal sowohl ohne Phasendrehung als auch mit einer Phasendrehung von 90° zuaddiert wird. Da kein Bezug zu einem Träger vorliegt, bedeutet diese Phasendrehung von 90°, daß sowohl der Real- als auch der Imaginärteil eines Probensignals mit einem einzigen Demodulator ermittelt und daraus der Betrag, aber auch die Phase bestimmt wird. Durch eine doppelte Anzahl von Meßschritten kann mit nur einem Demodulator, der ein Amplituden- oder ein Phasen-Demodulator sein kann, Betrag und Phase des Probensignals ermittelt werden. Als Frequenzdemodulator kann dadurch auch der Demodulator der Empfangsschaltung verwendet werden.

Besonders vorteilhaft ist es, wenn die Modulationsparameter der modulierten Probensignale derart gewählt sind, daß die Hilfsmodulationsfrequenzen in einem nicht genutzten Frequenzbereich eines Übertragungskanals auftreten. Dadurch wird sichergestellt, daß durch die Modulationsvorgänge gemäß dem hier beschriebenen Verfahren die Nutzsignale selbst nicht gestört werden. Wenn die Antennensignale frequenzmodulierte Stereo-Mulitplexsignale enthalten, ist es daher besonders vorteilhaft, wenn die mit der Hilfsmodulation modulierten Probensignale die Hilfsmodulation in einem Frequenzbereich oberhalb 57 kHz und/oder um 17 bzw. 21 kHz des Stereo-Multiplexsignals enthalten. Oder anders ausgedrückt, vorteilhaft ist es, wenn die durch die Hilfsmodulation dem Antennen- bzw. Linearkombinationssignal zugefügten Spektralanteile in einem Frequenzbereich außerhalb des Nutzbereichs liegen.

Im Falle, daß das Nutzsignal ein Video-Signal ist, wird die Hilfsmodulation vorteilhafterweise während der Zeilen- oder Bild-Austastlücke des jeweiligen Einzelsignals aufgeprägt. Da die Zeilen- oder Bild-Austastlücke in jeder Periode im wesentlichen dieselbe Amplitude aufweist, sind konstante, definierte Verhältnisse vorgegeben. Es können daher keine Meßfehler des Systems auf Grund unterschiedlicher Pegel auftreten, was der Fall wäre, wenn die Hilfsmodulation während des Intervalls aufgeprägt wird, in dem die eigentliche Video-Information mit unterschiedlichsten Amplituden übertragen wird. Durch dieses weitere Merkmal wird die Modulation des Einzelsignals einer Zeitbedingung unterworfen, so daß sich ein Zeit-Multiplex-Verfahren ergibt.

Besonders vorteilhaft ist es, wenn die einzelnen Probensignale zeitlich nacheinander wiederholt abgegriffen werden. Die Wiederholperiode kann dabei je nach den vorliegenden Gegebenheiten gewählt werden, um eine ausreichend schnelle Umschaltung auf das jeweils optimale Antennen-bzw. Linearkombinationssignal zu gewährleisten. Vorteilhaft ist es dabei auch, die Probensignal-Abgriff-Frequenz in Abhängigkeit äußerer Parameter, etwa der Fahrzeuggeschwindigkeit, zu ändern, um auch bei höheren Geschwindigkeiten eine entsprechend konstante Empfangsqualität zu erreichen.

Eine besonders vorteilhafte Weiterbildung der Erfindung besteht darin, daß alternativ oder zusätzlich zur Ermittlung des amplituden stärksten Antennen- bzw. Linearkombinationssignals der Störsignalgehalt des in der Empfangsschaltung verstärkten und selektierten Summensignals ermittelt und dieser als Parameter für die Auswahl eines Antennen- bzw. Linearkombinationssignals zum Empfang herangezogen wird. Dies ist besonders dann vorteilhaft, wenn in stark gestörter Umgebung, beispielsweise beim Durchfahren von Stadtbezirken mit Mehrwegeempfang durch Reflexionen an hohen Gebäuden, der Signalpegel für das Auswahlkriterium des optimalen Signals keine ausreichende Aussage liefert. Die Ermittlung des Störsignalgehalts und die entsprechende in Abhängigkeit davon vorgenommene Auswahl der Antennen- bzw. Linearkombinationssignale ergeben dadurch eine weiter Verbesserung des erfindungsgemäßen Empfangsverfahrens.

Vorteilhaft ist es, wenn der Zeitpunkt und/oder die Abfolge der Entnahme der jeweiligen Probensignale und/oder die Phasenumschaltung des jeweiligen einer Modulation unterzogenen Probensignals mit einem Prozessor gesteuert wird. Auch ist es vorteilhaft, wenn die Ermittlung des jeweils amplituden stärksten Probensignals und die Auswahl des dem amplituden stärksten Probensignal entsprechenden Antennen- bzw. Linearkombinationssignals prozessorgesteuert ist.

Besonders vorteilhaft ist es auch, wenn die Phaseninformation dazu verwendet wird, einen beim Wechsel von einem Antennen- bzw. Linearkombinationssignal auf ein anderes entstehenden Phasensprung auszugleichen. Dadurch wird ein bei Phasensprüngen sonst auftretendes Knackgeräusch ohne zusätzlichen Schaltungsaufwand verhindert.

Die erfindungsgemäße Aufgabe wird ebenfalls im Zusammenhang mit einem Empfangs-Antennensystem der eingangs genannten Art erfindungsgemäß gelöst durch jeweils eine Probensignal-Entnahmeschaltung, einen das entnommene Probensignal mit einem Hilfsmodulationssignal modulierenden Modulator, eine Summierschaltung, die ein willkürlich ausgewähltes Antennen- bzw. Linearkombinationssignal mit dem demodulierten Probensignal zur Bildung eines Summensignals addiert, einen Demodulator, der das in der Empfangsschaltung verstärkte und selektierte Summensignal demoduliert, eine Auswerteschaltung, die das demodulierte Signal nach Betrag und/oder Phase auswertet und das jeweils stärkste Probensignal ermittelt und eine Steuerschaltung, die einen Auswahlschalter so steuert, daß das dem stärksten Probensignal entsprechende Antennen- bzw. Linearkombinationssignal für den Empfang ausgewählt wird.

Durch die erfindungsgemäßen Merkmale ist es möglich, sämtliche Antennen- bzw. Linearkombinationssignale ständig bzw. sequentiell auf das amplituden stärkste Signal hin zu überprüfen, nämlich dadurch, daß jeweils Probensignale entnommen werden. Auf diese Weise ist es möglich, zu jedem Zeitpunkt auch das optimale Antennen- bzw. Linearkombinationssignal für den Empfang auszuwählen.

Wie im Falle des erfindungsgemäßen Empfangs-Antennenverfahrens ist es aus denselben dort bereits angegebenen Gründen vorteilhaft, wenn der Modulator dem Probensignal eine trägerlose Modulation aufprägt und dazu vorzugsweise als Zweiseitenband-Modulator ausgebildet ist.

Durch das vorteilhafte Merkmal, den Ausgang des Modulators mittels eines Alternativ-Umschalters wahlweise direkt oder über einen 90°-Phasenschieber mit dem Eingang der Empfangsschaltung zu verbinden, ist es auf einfachste Weise möglich, das willkürlich ausgewählte Antennen- bzw. Linearkombinationssignal sowohl mit dem amplitudenmodulierten als auch mit dem phasenmodulierten Probensignal zur Bildung eines Summensignals zu addieren. Mit nur einem einzigen Demodulator, der wahlweise auf Amplituden- oder Phasenmodulation empfindlich sein kann, und mit der doppelten Anzahl von Meßschritten ist es daher möglich, sowohl den Real- als auch den Imaginärteil und damit Betrag und Phase des Probensignals zu ermitteln.

Eine weitere vorteilhafte Ausgestaltung der Erfindung besteht darin, daß die Probensignal-Entnahmeschaltungen mit einem Probensignal-Umschalter verbunden sind. Durch Umschalten des Probensignal-Umschalters werden die einzelnen Probensignale zur sequentiellen Modulation und Aufaddierung auf das willkürlich ausgewählte Antennen- bzw. Linearkombinationssignal mit dem Modulator verbunden. Vorzugsweise wird das Steuersignal des Probensignal-Umschalters von der Auswerte- oder Steuerschaltung erzeugt. Dadurch ist bei der Auswertung des demodulierten Signals eine Zuordnung zu dem jeweiligen Probensignal gegeben.

Gemäß einer weiteren Ausführungsform der Erfindung ist zusätzlich oder alternativ ein Störsignaldetektor vorgesehen, dessen Ausgang mit einem Eingang der Auswerte- und/oder Steuerschaltung verbunden ist. Wie bereits erwähnt, ist es durch die Störsignaldetektion mittels des Störsignaldetektors möglich, das Auswahlkriterium für die Antennen- bzw. Linearkombinationssignale nicht nur auf das amplituden stärkste Signal zu beschränken, sondern auch oder alternativ dazu in Abhängigkeit vom Störsignalgehalt des jeweiligen Antennen- bzw. Linearkombinationssignals auszuwählen. Dadurch wird die Signalauswahl noch weiter verbessert.

Vorzugsweise ist die Auswerte- und/oder Steuerschaltung ein Prozessor.

Das Ausgangssignal des Demodulators und/oder des Stördetektors muß mittels eines Analog-Digital-Umsetzers in diesem Falle in ein digitales Signal umgesetzt werden.

Zwischen dem Auswahlschalter 6 und der Summierschaltung 7 kann ein Phasenstellglied eingeschaltet sein.

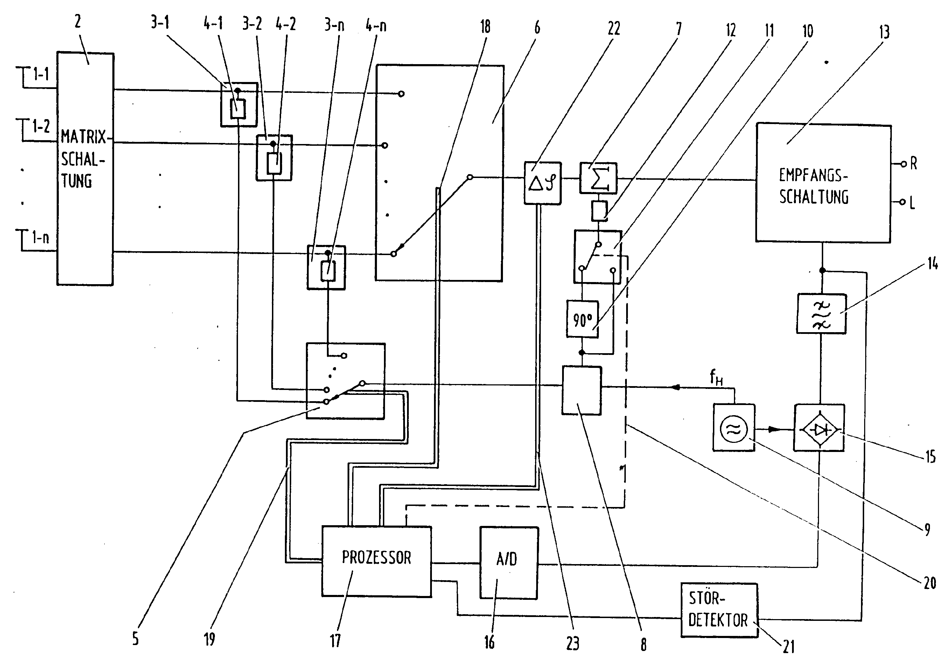

Die Erfindung wird nachstehend anhand der einzigen Zeichnung beispielsweise näher erläutert.

Die Antennenausgangssignale von Einzelantennen 1-1, 1-2, ..., 1-n werden einer Matrixschaltung 2 zugeleitet. Die Matrixschaltung 2 kombiniert die Antennensignale linear derart miteinander, daß an den Ausgängen vorzugsweise synthetische Antennensignale mit orthogonalen Richtdiagrammen bei geringster Überlappung

**4**

der Betragsfunktion entstehen. Eine derartige Matrixschaltung ist in der älteren, nicht vorveröffentlichten DE-A1-38 36 046 beschrieben.

Den Ausgangssignalen der Matrixschaltung 2, die die Antennen- bzw. Linearkombinationssignale darstellen, werden in Probensignal-Entnahmeschaltungen 3-1, 3-2, ..., 3-n jeweils Probensignale entnommen, die den Anschlüssen eines Probensignal-Umschalters 5 zugeleitet werden. Die Probensignal-Entnahmeschaltungen 3-1, 3-2, ..., 3-n enthalten jeweils Koppelimpedanzen 4-1, 4-2, ..., 4-n, über die der Abgriff der Probensignale erfolgt. Als Probensignal-Entnahmeschaltung kann auch ein anderes, dem Fachmann bekanntes Netzwerk verwendet werden.

Über einen Auswahlschalter 6 wird eines der Antennen- bzw. Linearkombinationssignale, die am Ausgang der Matrixschaltung 2 auftreten, einer Summierschaltung 7 zugeleitet.

Der Probensignal-Umschalter 5 leitet eines der Probensignale entsprechend seiner Schalterstellung an einen Modulator 8 weiter, in dem eine Modulation mit einer Hilfsfrequenz $f_H$ erfolgt, die von einem Hilfsoszillator 9 bereitgestellt wird. Das Ausgangssignal des Modulators 8 gelangt einmal direkt und zum anderen über einen 90°-Phasenschieber 10 an Anschlüsse eines Alternativ-Schalters 11, der abwechselnd das unveränderte und das um 90° phasenverdrehte Ausgangssignal des Modulators 8 der Summierschaltung 7 über eine Koppelimpedanz 12 zuleitet.

Der Modulator 8 ist ein Zweiseitenband-Modulator. Das Hilfsfrequenz-Modulationssignal, welches vom Hilfsoszillator 9 bereitgestellt wird, weist vorzugsweise eine Frequenz $f_H$ auf, die in einer Bandlücke des Nutzsignals liegt. Auf Grund der trägerlosen Modulation wird dem willkürlich ausgewählten Antennen- bzw. Linearkombinationssignal, das entsprechend der Schalterstellung des Auswahlschalters 6 an der Summierschaltung 7 anliegt, sowohl das amplituden- als auch das phasenmodulierte Probensignal aufaddiert, das entsprechend der Schalterstellung des Probensignal-Umschalters 5 dem Modulator 8 zugeleitet wird.

Das Summensignal wird einer Empfangsschaltung 13 zugeführt und das in ihr verstärkte und selektierte Summensignal wird nach dem FM-Demodulator im Falle einer Rundfunk-Empfangsschaltung als Stereo-Multiplex-Signal im ungefilterten Zustand entnommen und einer Filterschaltung 14 sowie einem anschließenden Synchron-Demodulator 15 zugeleitet, in denen das Hilfssignal ausgefiltert wird und nach Digitalisierung in einem Analog-Digital-Wandler 16 zu einem Prozessor 17 gelangt. Der Prozessor 17 ermittelt das jeweils stärkste Antennen- bzw. Linearkombinationssignal, und in Abhängigkeit davon wird der Auswahlschalter 6 über eine BUS-Leitung 18 vom Prozessor 17 derart gesteuert, daß das entsprechende stärkste Antennen- bzw. Linearkombinationssignal durchgeschaltet wird. Über eine weitere BUS-Leitung 19 steuert der Prozessor den Probensignal-Umschalter 5 derart, daß die einzelnen über die Probensignal-Entnahmeschaltung 3-1, 3-2, ..., 3-n abgegriffenen Probensignale sequentiell an den Modulator 8 geführt werden. Durch die Kenntnis der Schalterstellung des Probensignal-Umschalters 5 im Prozessor ergibt sich die Ermittlung des amplituden stärksten Antennen- bzw. Linearkombinationssignals.

Eine weitere Steuerleitung 20 führt vom Prozessor 17 zum Alternativschalter 11, um diesen umzuschalten. Die Schaltfrequenz des Alternativschalters 11 ist doppelt so hoch wie die Schaltfrequenz, d.h. die Probensignal-Abgriff-Frequenz des Probensignal-Umschalters 5.

Zur Steuerung eines zwischen Auswahlschalter 6 und Summierschaltung 7 eingeschalteten Phasenstellglieds 22 ist dieses über eine BUS-Leitung 23 ebenfalls mit dem Prozessor 17 verbunden. Die im Prozessor 17 vorliegende Phaseninformation kann zur Steuerung des Phasenstellglieds 22 ausgenutzt werden, derart, daß ein beim Wechsel von einem Antennen bzw. Linearkombinationssignal auf ein anderes entstehender Phasensprung ausgeglichen wird. Dadurch wird ein bei Phasensprüngen sonst auftretendes Knackgeräusch auf einfache Art vermieden.

Das der Empfangsschaltung 13 entnommene ungefilterte Stereo-Multiplex-Signal wird gemäß einer Ausgestaltung der Erfindung weiterhin einem Störddetektor 21 zugeleitet, der den Störanteil im Multiplex-Signal feststellt und eine Aussage darüber dem Prozessor 17 bereitstellt. Der Prozessor kann nunmehr in Abhängigkeit vom Störanteil des jeweiligen Probensignals und damit des Antennen- bzw. Linearkombinationssignals entweder unabhängig von der Stärke des Signals das Signal mit der geringsten Störung durch entsprechende Steuerung des Auswahlschalters 6 auswählen, oder aber eine kombinierte Auswahl in Abhängigkeit sowohl von der Signalamplitudenstärke als auch vom Störsignalanteil treffen.

## Patentansprüche

1. Empfangsverfahren für mobilen Empfang mit mehreren einzelnen Empfangsantennen, bei dem zwischen einzelnen Antennensignalen und/oder aus Linearkombinationen von Antennensignalen gebildeten Signalen umgeschaltet wird, dadurch gekennzeichnet, daß

– den einzelnen Antennen- bzw. Linearkombinationssignalen jeweils ein Probensignal entnommen wird,

– das jeweilig entnommene Probensignal mittels einer Hilfsmodulation amplituden- und/oder phasenmoduliert und einem willkürlich ausgewählten oder durch einen vorangegangenen Zyklus eingestellten Antennen- bzw. Linearkombinationssignal zur Bildung eines Summensignals zuaddiert wird,

– das in einer Empfangsschaltung verstärkte und selektierte Summensignal demoduliert wird,

– das demodulierte Signal nach Betrag und/oder Phase ausgewertet wird,

– das jeweils amplituden stärkste Probensignal ermittelt und

– das dem amplituden stärksten Probensignal entsprechende Antennen- bzw. Linearkombinationssignal für den Empfang ausgewählt wird.

2. Empfangsverfahren nach Anspruch 1, dadurch gekennzeichnet, daß das jeweilig entnommene Probensignal einer trägerlosen Modulation unterzogen wird.

3. Empfangsverfahren nach Anspruch 2, dadurch gekennzeichnet, daß das jeweilig entnommene Probensignal einer Zweiseitenband-Modulation unterzogen wird.

4. Empfangsverfahren nach einem der Ansprüche 1 bis 3, dadurch gekennzeichnet, daß das einer trägerlosen Modulation unterzogene Probensignal dem willkürlich ausgewählten oder durch vorangegangenen Zyklus eingestellten Antennen- bzw. Linearkombinationssignal zeitlich nacheinander sowohl ohne Phasendrehung als auch mit einer Phasendrehung von 90° zuaddiert wird.

5. Empfangsverfahren nach einem der Ansprüche 1 bis 4, dadurch gekennzeichnet, daß die Modulationsparameter der modulierten Probensignale derart gewählt sind, daß die Hilfsmodulationsfrequenzen ($f_H$) in einem nicht genutzten Frequenzbereich eines Übertragungskanals auftreten.

6. Empfangsverfahren nach einem der Ansprüche 1 bis 5, dadurch gekennzeichnet, daß die Nutzsignale frequenzmodulierte Stereo-Multiplex-Signale sind, und daß die mit der Hilfsmodulation modulierten Probensignale die Hilfsmodulation in einem Frequenzbereich oberhalb 57 kHz und/oder um 17 bzw. 21 kHz des Stereo-Multiplex-Signals enthalten.

7. Empfangsverfahren nach einem der Ansprüche 1 bis 5, dadurch gekennzeichnet, daß das Nutzsignal ein Videosignal ist, und daß die Hilfsmodulation während der Zeilen- oder Bild-Austastlücke des jeweiligen Einzelsignals aufgeprägt wird.

8. Empfangsverfahren nach einem der Ansprüche 1 bis 7, dadurch gekennzeichnet, daß die einzelnen Probensignale zeitlich nacheinander wiederholt abgegriffen werden.

9. Empfangsverfahren nach einem der Ansprüche 1 bis 8, dadurch gekennzeichnet, daß der Störsignalanteil des in der Empfangsschaltung verstärkten und selektierten Summensignals ermittelt und dieser alternativ oder zusätzlich zur Amplitudens Stärke des Probensignals als Parameter für die Auswahl eines Antennen- bzw. Linearkombinationssignals herangezogen wird.

10. Empfangsverfahren nach einem der Ansprüche 1 bis 9, dadurch gekennzeichnet, daß der Zeitpunkt und/oder die Abfolge der Entnahme der jeweiligen Probensignale und/oder die Phasenumschaltung des jeweiligen einer Modulation unterzogenen Probensignals prozessorgesteuert wird.

11. Empfangsverfahren nach einem der Ansprüche 1 bis 10, dadurch gekennzeichnet, daß die Ermittlung des jeweils amplituden stärksten Probensignals und/oder die Auswahl des dem amplitudens stärksten Probensignal entsprechenden Antennen- bzw. Linearkombinationssignals prozessorgesteuert wird.

12. Empfangsverfahren nach einem der Ansprüche 1 bis 11, dadurch gekennzeichnet, daß die Phaseninformation dazu verwendet wird, einen beim Wechsel von einem Antennen- bzw. Linearkombinationssignal auf ein anderes auftretenden Phasensprung auszugleichen.

13. Empfangs-Antennensystem für mobilen Empfang mit mehreren einzelnen Empfangsantennen, einem Umschalter, zum Umschalten zwischen den einzelnen Antennensignalen und/oder aus Linearkombinationen von Antennensignalen gebildeten Signalen, und einer Empfangsschaltung, gekennzeichnet durch

– jeweils eine Probensignal-Entnahmeschaltung (3-1, 3-2, ... 3-n),

– einen Modulator (8) zur Modulation des entnommenen Probensignals mit einem Hilfsmodulationssignal,

– eine Summierschaltung (7) zum Addieren eines willkürlich ausgewählten oder durch einen vorgegebenen Zyklus eingestellten Antennen- bzw. Linearkombinationssignales mit dem modulatierten Probensignal zwzcks Bildung eines Summensignals,

– einen Demodulator (15) zur Demodulation des in der Empfangsschaltung (13) verstärkten und selektierten Summensignals,

– eine Auswerteschaltung (17) zur Auswertung des demodulatierten Signals nach betrag und/oder Phase und zur Ermittlung des jeweils amplituden starksten Probensignals und

– eine Steuerschaltung (17) zur Steuerung eines Auswahlschalters (6) zwecks Auswahl des dem amplitudenstärksten Probensignal entsprechenden Antennen- bzw. Linearkombinationsssignals für den Empfang.

14. Empfangs-Antennensystem nach Anspruch 13, dadurch gekennzeichnet, daß der Modulator (8) dem Probensignal eine trägerlose Modulation aufprägt.

15. Empfangs-Antennensystem nach Anspruch 13, dadurch gekennzeichnet, daß der Modulator (8) ein Zweiseitenband-Modulator ist.

16. Empfangs-Antennensystem nach einem der Ansprüche 13 bis 15, dadurch gekennzeichnet, daß der Ausgang des Modulators (8) mittels eines Alternativ-Umschalters (11) abwechselnd direkt ober über einen 90°-Phasenschieber (10) mit der Summierschaltung (7) verbunden ist.

17. Empfangs-Antennensystem nach einem der Ansprüche 13 bis 16, dadurch gekennzeichnet, daß die Probensignal-Entnahmeschaltungen (3-1, 3-2, ..., 3-n) mit einem Probensignal-Umschalter (5) verbunden sind.

18. Empfangs-Antennensystem nach einem der Ansprüche 13 bis 17, dadurch gekennzeichnet, daß das Steuersignal des Probensignal-Umschalters (5) von der Steuerschaltung (17) erzeugt wird.

19. Empfangs-Antennensystem nach einem der Ansprüche 13 bis 18, dadurch gekennzeichnet, daß ein Störsignaldetektor (21) vorgesehen ist, dessen Ausgang mit einem Eingang der Auswerte- und/oder Steuerschaltung (17) verbunden ist.

20. Empfangs-Antennensystem nach einem der Ansprüche 13 bis 19, dadurch gekennzeichnet, daß die Auswerte- und/oder Steuerschaltung (17) ein Prozessor ist.

21. Empfangs-Antennensystem nach einem der Ansprüche 13 bis 20, gekennzeichnet durch ein zwischen dem Auswahlschalter (6) und der Summierschaltung (7) angeordnetes Phasenstellglied (22), dessen Steuereingang mit dem Prozessor (17) verbunden ist.

## Claims

1. Receiving method for mobile reception having a plurality of individual receiving antennas in which switching is effected between individual antenna signals and/or signals formed from linear combinations of antenna signals, characterized in that
– from each of the individual antenna or linear combination signals a sample signal is taken,
– the particular sample signal taken is amplitude-modulated and/or phase-modulated by means of an auxiliary modulation and added to an antenna or linear combination signal arbitrarily selected or determined by a preceeding cycle to form a summation signal,
– the summation signal amplified in a receiving circuit and selected is demodulated,
– the demodulated signal is evaluated according to amount and/or phase,
– the particular strongest sample signal with respect to amplitude is determined, and
– the antenna or linear combination signal corresponding to the strongest sample signal with respect to amplitude is selected for the reception.

2. Receiving method according to claim 1, characterized in that the particular sample signal taken is subjected to a carrierless modulation.

3. Receiving method according to claim 2, characterized in that the particular sample signal taken is subjected to a double-sideband modulation.

4. Receiving method according to any one of claims 1 to 3, characterized in that the sample signal subjected to a carrierless modulation is added to the antenna or linear combination signal arbitrarily selected or determined by a preceeding cycle in succession both without phase rotation and with a phase rotation of 90°.

5. Receiving method according to any one of claims 1 to 4, characterized in that the modulation parameters of the modulated sample signals are selected in such a manner that the auxiliary modulation frequencies ($f_H$) occur in an unused frequency range of a transmission channel.

6. Receiving method according to any one of claims 1 to 5, characterized in that the useful signals are frequency-modulated stereo multiplex signals and that the sample signals modulated with the auxiliary modulation contain the auxiliary modulation in a frequency range above 57 kHz and/or around 17 or 21 kHz of the stereo multiplex signal.

7. Receiving method according to any one of claims 1 to 5, characterized in that the useful signal is a video signal and that the auxiliary modulation is impressed during the line or frame blanking interval of the respective individual signal.

8. Receiving method according to any one of claims 1 to 7, characterized in that the individual sample signals are tapped off repeatedly in succession.

9. Receiving method according to any one of claims 1 to 8, characterized in that the interference signal component of the summation signal amplified in the receiving circuit and selected is determined and said summation signal used alternatively or additionally to the amplitudinal strength of the sample signal as parameter for the selection of an antenna or linear combination signal.

10. Receiving method according to any one of claims 1 to 9, characterized in that the instant and/or the succession of the taking of the particular sample signals and/or the phase changeover of the particular sample signal subjected to a modulation is controlled by a processor.

11. Receiving method according to any one of claims 1 to 10, characterized in that the determination of the particular strongest sample signal with respect to amplitude and/or the selection of the antenna or linear combination signal corresponding to the strongest sample signal with respect to amplitude is controlled by a processor.

12. Receiving method according to any one of claims 1 to 11, characterized in that the phase information is utilized to compensate a phase jump occurring on changing from one antenna or linear combination signal to another.

13. Receiving antenna system for mobile reception comprising a plurality of individual receiving antennas, a changeover switch which switches between the individual antenna signals and/or signals formed from linear combinations of antenna signals, and a receiving circuit, characterized by

– each one sample signal taking circuit (3-1, 3-2, ..., 3-n),
– a modulator (8) modulating the sample signal taken with an auxiliary modulation signal,
– a summation circuit (7) adding an antenna or linear combination signal arbitrarily selected or determined by a preceeding cycle to the demodulated sample signal to form a summation signal,
– a demodulator (15) which demodulates the summation signal amplified in the receiving circuit (13) and selected,
– an evaluating circuit (17) which evaluates the demodulated signal in accordance with amount and/or phase and determines the particular strongest sample signal with respect to amplitude, and
– a control circuit (17) which controls a selection switch (6) so that the antenna or linear combination signal corresponding to the strongest sample signal is selected for the reception.

14. Receiving antenna system according to claim 13, characterized in that the modulator (8) impresses a carrierless modulation on the sample signal.

15. Receiving antenna system according to claim 13, characterized in that the modulator (8) is a double-sideband modulator.

16. Receiving antenna system according to any one of claims 13 to 15, characterized in that the output of the modulator (8) is connected to the summation circuit (7) by means of an alternative changeover switch (11) alternately directly or via a 90° phase shifter (10).

17. Receiving antenna system according to any one of claims 13 to 16, characterized in that the sample signal taking circuits (3-1, 3-2, ..., 3-n) are connected to a sample signal changeover switch (5).

18. Receiving antenna system according to any one of claims 13 to 17, characterized in that the control signal of the sample signal changeover switch (5) is generated by the control circuit (17).

19. Receiving antenna system according to any one of claims 13 to 18, characterized in that an interference signal detector (21) is provided, the output of which is connected to an input of the evaluating and/or control circuit (17).

20. Receiving antenna system according to any one of claims 13 to 19, characterized in that the evaluating and/or control circuit (17) is a processor.

21. Receiving antenna system according to any one of claims 13 to 20, characterized by a phase shift member (22) which is arranged between the selection switch (6) and the summation circuit (7) and the control input of which is connected to the processor (17).

**Revendications**

1. Méthode de réception pour réception mobile, à l'aide de plusieurs antennes réceptrices individuelles, dans laquelle on procède à la commutation entre différents signaux d'antenne et/ou signaux formés par des combinaisons linéaires de signaux d'antennes, caractérisée en ce que

– on prélève un signal échantillon sur chacune des différentes antennes, ou chacun des différents signaux de combinaison linéaire,
– chaque signal échantillon prélevé est soumis à une modulation d'amplitude et/ou de phase, à l'aide d'une modulation auxiliaire, et ajouté à un signal d'antenne, ou un signal de combinaison linéaire, choisi au choix ou établi au moyen d'un cycle de passage prioritaire, en vue de former un signal de somme,
– le signal de somme amplifié et sélectionné est démodulé dans un circuit de réception,
– le signal démodulé est exploité suivant son amplitude et/ou sa phase,
– on détermine chaque fois le signal d'échantillon dont l'amplitude est la plus forte, et
– on sélectionne pour la réception le signal d'antenne, ou de combinaison linéaire correspondant au signal échantillon dont l'amplitude est la plus forte.

2. Méthode de réception selon la revendication 1, caractérisée en ce que le signal échantillon spécifique prélevé est soumis à une modulation sans porteuse.

EP 0 345 843 B1

3. Méthode de réception selon la revendication 2, caractérisée en ce que le signal échantillon spécifique prélevé est soumis à une modulation à deux bandes latérales.

4. Méthode de réception selon l'une des revendications 1 à 3, caractérisée en ce que le signal échantillon soumis à une modulation sans porteuse est ajouté, chronologiquement l'un à la suite de l'autre, tant sans rotation de phase qu'également avec une rotation de phase de 90°, au signal d'antenne, ou de combinaison linéaire sélectionné au choix ou établi au moyen d'un cycle de passage prioritaire.

5. Méthode de réception selon l'une des revendications 1 à 4, caractérisée en ce que les paramètres de modulation des signaux échantillon modulés sont choisis de telle façon que les fréquences de modulation auxiliaire ($f_H$) se situent dans une plage de fréquence non utilisée d'un canal de transmission.

6. Méthode de réception selon l'une des revendications 1 à 5, caractérisée en ce que les signaux utiles sont des signaux multiplex-stéréo, modulés en fréquence, et que les signaux échantillons modulés à l'aide de la modulation auxiliaire contiennent la modulation auxiliaire dans une plage de fréquence située au-dessus de 57 kHz et/ou de 17, ou 21 kHz du signal multiplex-stéréo.

7. Méthode de réception selon l'une des revendications 1 à 5, caractérisée en ce que le signal utile est un signal vidéo et que la modulation auxiliaire est imprimée pendant les intervalles entre lignes ou images de chaque signal spécifique.

8. Méthode de réception selon l'une des revendications 1 à 7, caractérisée en ce que les différents signaux échantillons sont prélevés temporellement répétitivement, les uns à la suite des autres.

9. Méthode de réception selon l'une des revendications 1 à 8, caractérisée en ce que la partie de signal parasite du signal de somme, amplifié dans le circuit récepteur et sélectionné, est déterminée et sollicitée alternativement, ou supplémentairement à l'ampleur de l'amplitude du signal échantillon, à titre de paramètre pour opérer la sélection d'un signal d'antenne, ou d'une combinaison linéaire de signaux.

10. Méthode de réception selon l'une des revendications 1 à 9, caractérisée en ce que le moment et/ou la succession de prélèvement des différents signaux échantillons et/ou de la commutation de phase du signal échantillon, chaque fois soumis à une modulation, est commandé par un processeur.

11. Méthode de réception selon l'une des revendications 1 à 10, caractérisée en ce que la détermination du signal échantillon présentant chaque fois la plus forte amplitude et/ou la sélection du signal d'antenne, ou du signal de combinaison linéaire correspondant au signal échantillon présentant chaque fois la plus forte amplitude est commandée par un processeur.

12. Méthode de réception selon l'une des revendications 1 à 11, caractérisée en ce qu'on utilise l'information de phase pour obtenir, lors du passage d'un signal d'antenne, ou d'un signal de combinaison linéaire, à un autre, un équilibrage du saut de phase qui se produit.

13. Système d'antenne de réception pour réception mobile, comportant plusieurs antennes de réception spécifiques, un commutateur pour opérer la commutation entre les différents signaux d'antenne et/ou les signaux formés par les combinaisons linéaires de signaux d'antenne, et un circuit récepteur, caractérisé par
   – chaque fois un circuit de prélèvement de signal échantillon (3-1,3-2,...3-n),
   – un modulateur (8), pour opérer la modulation du signal échantillon prélevé à l'aide d'un signal de modulation auxiliaire,
   – un circuit sommateur (7), pour opérer l'addition d'un signal d'antenne, ou d'un signal de combinaison linéaire, sélectionné au choix ou au moyen d'un cycle prédéterminé, avec la signal échantillon modulé, en vue de former un signal de somme,
   – un démodulateur (15), pour opérer la démodulation du signal de somme amplifié et sélectionné dans le circuit récepteur (13),
   – un circuit de sélection (17), pour exploiter le signal démodulé, suivant son amplitude et/ou sa phase, et pour déterminer celui des signaux échantillon dont l'amplitude est le plus forte, et
   – un circuit de commande (17), pour opérer la commande d'un commutateur de sélection (6), en vue de sélectionner, pour la réception, le signal d'antenne, ou le signal de combinaison linéaire correspondant au signal échantillon dont l'amplitude est la plus forte.

14. Système d'antenne de réception selon l'une des revendications 1 à 13, caractérisé en ce que le modulateur (8) imprime au signal échantillon une modulation sans porteuse.

15. Système d'antenne de réception selon la revendication 13, caractérisé en ce que le modulateur (8) est un modulateur à deux bandes latérales.

16. Système d'antenne de réception selon l'une des revendications 13 à 15, caractérisé en ce que la sortie du modulateur (8) est reliée au circuit sommateur (7), au moyen d'un commutateur d'alternance (11), alternativement, directement ou par l'intermédiaire d'un déphaseur à 90° (10).

17. Système d'antenne de réception selon l'une des revendications 13 à 16, caractérisé en ce que les circuit de prélèvement de signal échantillon (3-1,3-2,...,3-n) sont reliés à un commutateur de signal échantillon (5).

18. Système d'antenne de réception selon l'une des revendications 13 à 17, caractérisé en ce que le signal

9

de commande du commutateur de signal échantillon (5) est produit par le circuit de commande (17).

19. Système d'antenne de réception selon l'une des revendications 13 à 18, caractérisé en ce qu'il est prévu un détecteur de signal parasite (21), dont la sortie est reliée à une entrée du circuit d'exploitation et/ou de commande (17).

20. Système d'antenne de réception selon l'une des revendications 13 à 19, caractérisé en ce que le circuit d'exploitation et/ou de commande (17) est un processeur.

21. Système d'antenne de réception selon l'une des revendications 13 à 20, caractérisé par un régleur de phase (22), disposé entre le commutateur de sélection (6) et le circuit sommateur (7), dont l'entrée de commande est reliée à un processeur (17).